(19) **Europäisches Patentamt / European Patent Office / Office européen des brevets**

(11) **EP 4 708 187 A1**

(12) **EUROPEAN PATENT APPLICATION**
published in accordance with Art. 153(4) EPC

(43) Date of publication:
**11.03.2026 Bulletin 2026/11**

(21) Application number: **24797478.5**

(22) Date of filing: **26.04.2024**

(51) International Patent Classification (IPC):
**G06Q 50/00** (2024.01)    **G06N 3/08** (2023.01)

(52) Cooperative Patent Classification (CPC):
**G06N 3/08; G06Q 50/00**

(86) International application number:
**PCT/KR2024/005695**

(87) International publication number:
**WO 2024/225824 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.04.2023 KR 20230054983**
**25.04.2024 KR 20240055592**

(71) Applicant: **Hyperconnect LLC**
**Seoul 06164 (KR)**

(72) Inventors:
• **KYE, Seong Min**
**Seoul 06164 (KR)**
• **KIM, Min Chan**
**Seoul 06164 (KR)**
• **KIM, Beom Su**
**Seoul 06164 (KR)**
• **KIM, Sang Bum**
**Seoul 06164 (KR)**
• **YEOM, Gihoon**
**Seoul 06164 (KR)**
• **LEE, Suhyun**
**Seoul 06164 (KR)**
• **LEE, Youngsoo**
**Seoul 06164 (KR)**
• **LEE, Joonyoung**
**Seoul 06164 (KR)**
• **CHANG, Bu Ru**
**Seoul 06164 (KR)**
• **CHO, Geonwoo**
**Seoul 06164 (KR)**
• **HA, Sungjoo**
**Seoul 06164 (KR)**

(74) Representative: **Haseltine Lake Kempner LLP**
**Cheapside House**
**138 Cheapside**
**London EC2V 6BJ (GB)**

(54) **MUTUAL RECOMMENDATION DEVICE, METHOD, AND COMPUTER-READABLE RECORDING MEDIUM**

(57)    Disclosed are an apparatus that mutually recommends users and a method for same. The method of mutually recommending users of a matching service according to an embodiment comprises: a step wherein a user feature embedding of a first user is updated based on user information of the first user; a step wherein the session feature embedding of the first user is asynchronously updated with the user feature embedding of the first user, based on the session information of the first user; a step wherein a match request is received from the first user; a step wherein a final embedding of the first user is generated based on the user feature embedding of the first user and the session feature embedding of the first user; and a step wherein a second user to be matched with the first user is decided on from among the plurality of users, based on the final embedding of the first user and the respective final embeddings of the plurality of users included in the matching pool with the first user.

FIG. 3

**Description**

[Technical Field]

The present invention relates to an apparatus, method, and computer recording medium for mutually recommending one user and another user on a matching service.

[Background Art]

Matching services have recently expanded beyond "social networks," which maintain relationships formed offline online, into "social discovery" services, which create new relationships based on users' interests. Matching services make is possible for users to form various relationships beyond simply establishing romantic relationships, such as finding friends, connecting companies with job seekers, and seeking out new acquaintances.

However, matching service systems face significant difficulties due to the "cold-start problem," which is well known in the mutual recommendation field. The cold-start problem refers to the problem where the system does not have enough information to make suitable recommendations for new users or users with particular preferences, concepts, or behavioral patterns. Due to the nature of matching services, the system must deal with many "cold-start users" who have a cold-start problem; this is a cause of greater difficult for the system in understanding mutual interests, tastes, and the like that are shared between users.

Session-based recommendation has been proposed as a method for alleviating cold-start problems. Such a session-based recommendation seeks to understand a user's intent or preferences based on short-term user behavior within a user session; this is particularly effective in modeling the behavior of a cold-start user with a limited past history.

However, there are difficulties in extending a mutual recommendation system in a matching service to a session-based recommendation system, owing to various limitations in the deployment scenario. First, every recommendation must be made with low latency, and a session-based recommendation is slower than a static recommendation because additional work is needed in order to model user behavior across user sessions. Because a traditional recommendation system needs to suggest only a few items of interest to the user, it narrows the item pool through search and ranks items within the narrowed pool to achieve low latency; in contrast, a mutual recommendation system in a matching service must individually suggest matches to users in the matching pool, which imposes a substantial computational cost. If the computation of a recommendation is slow then the user wait times can be increased, which can have a negative impact on user experience and, in severe cases, can even lead to leaving the service. Second, user behavior modeling is very complex. The majority of session-based recommender systems focus on modeling user behavior by using a static representation typical items of the item candidate pool. In contrast, to enable a recommender system to be trained on mutual interests, tastes, and the like that are shared between users, dynamic representations of both users must be modeled in each matching session. Such complex modeling of user behavior makes training the recommender system less efficient.

[Summary of Invention]

[Technical problem]

The present invention is intended to solve the above-described problems, and has the object of enabling session-based mutual recommendations to be made efficiently in a matching service, particularly a real-time matching service.

The technical problems to be solved by the present invention are not limited to the technical problem set forth above; further technical problems can be inferred from the embodiments below.

[Technical Means of Solving the Problem]

The method of mutually recommending users of a matching service according to one disclosed embodiment comprises: a step wherein a user feature embedding of a first user is updated based on user information of the first user; a step wherein the session feature embedding of the first user is asynchronously updated with the user feature embedding of the first user, based on the session information of the first user; a step wherein a match request is received from the first user; a step wherein a final embedding of the first user is generated based on the user feature embedding of the first user and the session feature embedding of the first user; and a step wherein a second user to be matched with the first user is decided on from among the plurality of users, based on the final embedding of the first user and the respective final embeddings of the plurality of users included in the matching pool with the first user.

In one embodiment, the user information of the first user may comprise personal information corresponding to the profile of the first user and preference information corresponding to the matching conditions that the first user prefers. By way of an example related to this, the step wherein the user feature embedding of the first user is updated may also [comprise:] a step wherein the user feature embedding is updated based on the personal information of the first user prior to the match request; and a step wherein the user feature embedding is updated based on the preference information of the first user after the match request. By way of another example, the step wherein the user feature embedding of the first user updated may comprise a step wherein, after the match request, a user feature embedding based on the personal information of the first user, and a user feature embedding based on the preference information, are updated.

In one embodiment, the step wherein the session feature embedding of the first user is updated may comprise a step wherein, after the match of the first user ends, the session feature embedding of the first user is updated based on the session information of the first user, which reflects the history of the ended match. More specifically, the step wherein the session feature embedding of the first user is updated may comprise: a step wherein a match embedding corresponding to each of the first user's respective previous matches is generated based on the match history of the first user, which is included in the session information of the first user; a step wherein there are generated an initial match embedding that reflects the start of the match history, and a session feature embedding of the first user based on the match embeddings; and a step wherein the session feature embedding of the first user is stored in an embedding memory.

Specifically, the step wherein the match embeddings are generated may comprise a step wherein the user features of the first user and the user features of the counterpart, in each of the first user's respective previous matches, are input into a first model that comprises a linear model and a forward neural network model, to output the match embeddings. In addition, the step wherein the session feature embedding of the first user is generated may comprise: a step wherein the initial match embedding and the match embeddings are input into a second model based on a transformer architecture, to output the session feature embedding of the first user. In addition, the step of storing may comprise a step wherein, if there is a previously stored session feature embedding of the first user in the embedding memory, then the newly generated session feature embedding of the first user replaces the previously stored session feature embedding of the first user.

In one embodiment, the final embedding of the first user may be generated by summing the user feature embedding of the first user and the session feature embedding of the first user queried from the embedding memory pursuant to the match request.

In one embodiment, the step wherein the second user is decided on may comprise: a step wherein a satisfaction score of the first user is predicted for each respective user among the plurality of users, based on the final embedding of the first user and the respective final embedding of each of the plurality of users; and a step wherein the user, from among the plurality of users, that has the highest predicted satisfaction score with the first user is decided on as the second user. In this regard, the satisfaction score may be the predicted conversation time, and the conversation time may be predicted as the scalar product (dot product) of the respective final embedding of each of the plurality of users with the final embedding of the first user. Alternatively, the satisfaction score may be the predicted conversation time, and the conversation time may be predicted as the scalar product of a linear transformation of the respective final embedding of each of the plurality of users with a linear transformation of the final embedding of the first user. Alternatively, the satisfaction score may be the predicted conversation time, and the conversation time may be predicted as an exponential transformation of a scalar product of a linear transformation of the respective final embedding of each of the plurality of users with a linear transformation of the final embedding of the first user.

In one embodiment, the mutual recommendation method may further comprise a step wherein at least some of the trainable parameters constituting the user feature embedding layer, the session feature embedding layer, and the conversation time prediction layer, are trained based on a loss function using the error between the predicted conversation time and the actual conversation time. In this regard, the loss function may be computed as the mean squared error (MSE) between the predicted conversation time and the actual conversation time. Also, the learning phase may further comprise: a step wherein data for training based on the loss function are augmented by additionally predicting the conversation time in the Nth match of a particular user, using the session feature embedding corresponding to the match previous to the Nth match of that particular user (where N is a natural number of at least 2).

In one embodiment, the learning phase may further comprise: a first learning phase in which at least some of the trainable parameters constituting the user feature embedding layer, the auxiliary user feature embedding layer, the session feature embedding layer, and the conversation time prediction layer, are trained, and a second learning phase in which the user feature embedding layer and the session feature embedding layer are held constant and at least some of the trainable parameters making up the conversation time prediction layer are trained.

A computer-readable recording medium may be provided, on which is recorded a program for carrying out a method that generalizes the domain of the machine learning model according to the present invention.

According to one disclosed embodiment, an apparatus for mutual recommendation between users of a matching service, comprises a memory that stores commands and a processor, wherein the processor is connected to the memory, and: updates a user feature embedding of a first user based on user information of the first user; asynchronously updates the session feature embedding of the first user with the user feature embedding of the first user, based on the session information of the first user; receives a match request from the first user; generates a final embedding of the first user based on the user feature embedding of the first user and the session feature embedding of the first user; and decides on a second user to be matched with the first user, from among the plurality of users, based on the final embedding of the first user and the respective final embeddings of the plurality of users included in the matching pool with the first user.

Other specific details of embodiments are included in the detailed description and the drawings.

[Effect of Invention]

*19 According to the present invention, by asynchronously processing session-based user behavior modeling separately from the matching pipeline, the latency arising during user behavior modeling can be reduced, and as a result the strict latency-related requirements required under actual matching service deployment scenarios can be satisfied.

In addition, according to the present invention, by replacing the computation that occurs to find the optimal combination of user pairs in the matching pool with a comparatively simple calculation logic, the latency arising in the matching service can be further reduced.

In addition, according to the present invention, a two-step learning method for a mutual recommendation system is proposed whereby the problem of inefficient user behavior modeling that hinders learning efficiency can be solved, and the mutual recommendation system can efficiently learn mutual interests, tastes, and the like that are shared between users, based on a large-scale user match history.

The effects of the invention are not limited to the effects mentioned above; further effects not mentioned will be plainly apparent to a person of ordinary skill in the art based on what is recited in the claims.

[Brief Description of the Drawings]

FIG. 1a is an illustrative drawing showing an existing recommendation system that suggests items from a fixed item candidate pool, and FIG. 1b is an illustrative drawing showing a system for mutual recommendation between users in a matching service.

FIG. 2 is a drawing that shows a schematic configuration of a system comprising a mutual recommendation apparatus according to one embodiment.

FIG. 3 is a flowchart illustrating a mutual recommendation method according to one embodiment.

FIG. 4 is an illustrative drawing showing an architecture for synchronous user session modeling, and an architecture for asynchronous user session modeling.

FIG. 5 is an illustrative drawing concretely illustrating an architecture for asynchronous user session modeling.

FIG. 6 is an illustrative drawing showing a distribution of predicted conversation time and actual conversation time among users.

FIG. 7 is a flowchart illustrating a mutual recommendation method according to an additional embodiment.

FIG. 8 is an illustrative drawing of an algorithm for training a layer for mutual recommendation.

FIGS. 9 to 12 are drawings comparatively analyzing the performances of the mutual recommendation method according to an embodiment and other methods.

FIG. 13 is a block diagram illustrating a mutual recommendation apparatus according to one embodiment.

[Best Mode of Implementing the Invention]

Below, specific embodiments are explained with reference to the drawings. The detailed description below is provided in order to assist in a comprehensive understanding of the methods, apparatus, and/or systems described in the present specification. However, this is merely illustrative, and the disclosed embodiments are not limited thereto.

In describing the embodiments, if a detailed description of the relevant known art is judged to unnecessarily obscure the gist of the disclosed embodiments, then it may be omitted. Also, the terms used below are terms defined in view of functionality within the disclosed embodiments; this may differ depending on the intention or custom, etc., of users or operators. Therefore, the definition thereof must be determined based on the overall content of the present specification. The terms used in the detailed description are solely for the purpose of describing embodiments, and should not be considered limiting. Unless clearly used otherwise, representations in the singular form encompass the meaning of the plural form. In the present description, representations such as "comprising" or "furnished with" are intended to indicate certain features, numbers, steps, operations, elements, portions or combinations thereof, and should not be construed to exclude the presence or possibility of one or more other features, numbers, steps, operations, elements, portions or combinations thereof, other than those described.

The terms used in the embodiments have been selected from conventionally used terms as much as possible considering the functions of the present invention, but this may vary depending on the intent or precedents of technicians working in the field, the emergence of new technologies, and the like. Additionally, in some particular cases, terms have been arbitrarily selected by the applicant; in such cases, the meaning thereof will be described in detail in the relevant portion of the description. Therefore, the terms used in the present invention must be defined based on the meaning of the terms and the overall content of this disclosure, rather than simply based on the names of the terms.

Throughout the specification, if a portion of a specification is said to "comprise" an element, this does not mean that it excludes other elements, but rather that it may further comprise other elements, unless otherwise stated. Additionally, terms such as "... part," "... module," and the like, as set forth in the specification, refer to a unit that processes at least one function or operation, which may be implemented by hardware or software, or a combination of hardware and software; in practical operation, unlike the examples shown, they may not be clearly distinguished.

The representation "at least one of a, b, and c" as used throughout the specification may encompass "only a," "only b," "only c," "a and b," "a and c," "b and c," or "all of a, b, and c."

In the following description, terms such as "transmission," "communication," "sending," "receiving," and other similar representations encompass not only to the direct delivery of a signal or information from one element to another, but also delivery via other elements.

In particular, "transmitting" or "sending" a signal or information to an element indicates the final destination of that signal or information and does not imply a direct destination. This also applies in the same way to "receiving" a signal or information. Also, in the present specification, when 2 or more pieces of data or information are described as "related," it means that when one piece of data (or information) is obtained, at least a portion of the other piece of data (or information) can be obtained on that basis.

Additionally, although terms such as first, second, and the like can be used to describe various elements, the elements should not be considered to be limited by these terms. These terms may be used for the purpose of distinguishing one element from another element.

For example, without departing from the claimed scope of the present invention, the first element may be renamed as the second, and likewise the second element may be renamed as the first.

In describing the embodiments, the description of technical content will be omitted that is widely known in the technical field to which the present invention belongs and does not directly relate to the present invention. This is done in order to omit unnecessary explanation in order to convey the gist of the present invention more clearly.

For the same reason, some elements in the accompanying drawings are exaggerated, omitted, or shown schematically. Furthermore, the size of each element does not necessarily reflect its actual size. Identical or corresponding elements in each drawing are assigned the same reference numbers.

The advantages and characteristics of the present invention, and the method by which these are achieved, will become clear upon referring to the embodiments described in detail below, in combination with the attached drawings. However, the present invention is not limited to the embodiments set forth below, but can be implemented in various different forms; the present embodiments are provided only to complete the disclosure of the present invention, and to fully inform a person of ordinary skill in the art to which the invention pertains regarding the scope of the invention; the present invention is defined only by the scope of the claims. Throughout the specification, the same reference symbols denote the same elements.

It will be understood that each block of the process flowcharts, and combinations of the flowcharts, can be carried out by means of computer program instructions. These computer program instructions may be loaded in a processor of a general-purpose computer, a special-purpose computer, or other programmable data processing apparatus, such that when the processor of the computer or other programmable data processing apparatus executes the instructions, a means is generated for carrying out the functions described in the flowchart block(s). These computer program instructions can also be stored in a computer-usable or computer-readable memory that can direct a computer or other programmable data processing apparatus to implement a function in a particular way; consequently, the instructions stored in the computer-usable or computer-readable memory can also produce an article of manufacture that comprises an instruction means for carrying out the function described in the flowchart block(s). Because the computer program instructions can also be loaded in a computer or other programmable data processing apparatus, a series of operational steps can be carried out on the computer or other programmable data processing apparatus to generate a computer-executable process, so that the instructions carried out on the computer or other programmable data processing apparatus can also provide steps for executing the functions described in the flowchart block(s).

In addition, each block may represent a module, segment, or portion of code that comprises one or more executable instructions for executing a particular logical function(s). It should also be noted that in some alternative embodiments, it is possible for the functions mentioned in the blocks to occur out of order. For example, two blocks shown in succession may in fact be executed at substantially the same time, or depending on the respective functions of the blocks, they may sometimes be executed in reverse order.

Below, one embodiment of the present invention will be described in detail, with reference to the attached drawings, so that a person of ordinary skill in the art of the field to which the present invention belongs can readily implement it. However, the present invention is not limited to the embodiment described here, and may be implemented in several different forms.

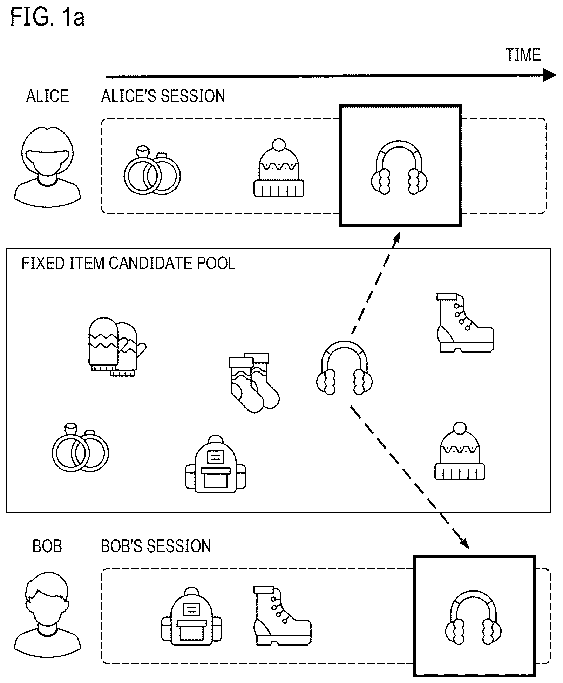

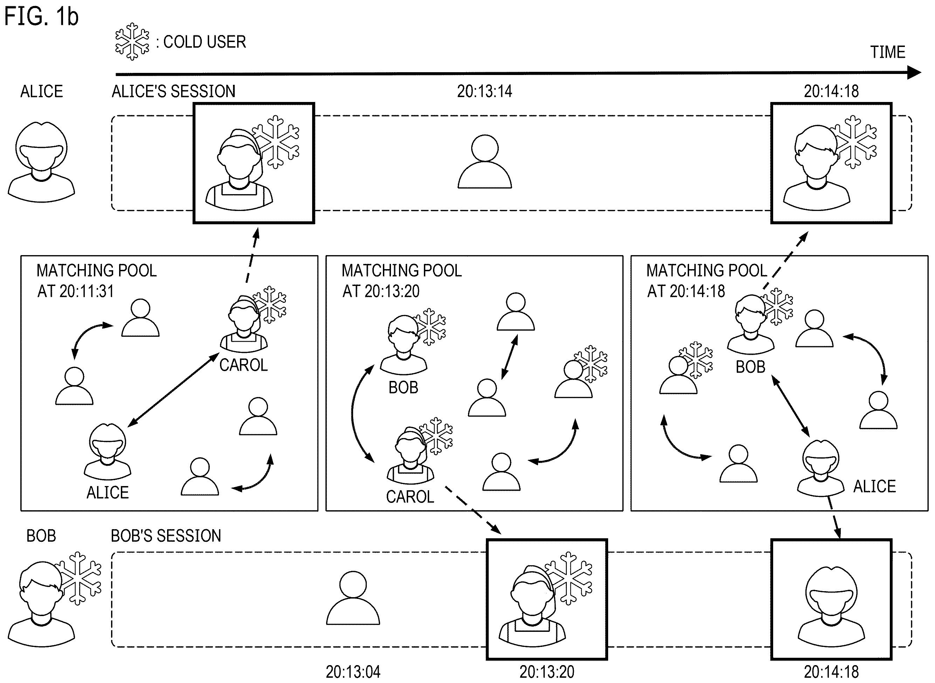

FIG. 1a is a drawing showing an existing recommendation system that suggests items from a fixed item candidate pool, and FIG. 1b is a drawing showing a system for mutual recommendation between users in a matching service.

As illustrated in FIG. 1a, an existing recommendation system suggests items to users (Alice, Bob) from among a fixed pool of candidate items (gloves, rings, a bag, socks, earmuffs, shoes, a hat). Referring to Alice and Bob's session, over time, the rings, the hat, and the earmuffs were recommended to Alice, and the bag, the shoes, and the earmuffs were recommended to Bob. In this case, the time when the earmuffs are recommended to Alice differs from the time when the earmuffs are recommended to Bob, but the representation of the earmuffs is the same in Alice's session and in Bob's session.

In contrast, the mutual recommendation system illustrated in FIG. 1b suggests users to each other within a dynamic matching pool that changes over time. This means that a user becomes the target of an item recommended to another user, and the representations of users recommended to each other change continuously over time as the matching process proceeds. For example, in modeling Alice and Bob's behavior, Carol's representation, which was matched for both of them, differs for each user depending on the conversation time. In other words, the representation of Carol matched with Alice is the representation at 20:11:31, and the representation of Carol matched with Bob is the representation at 20:13:20. Therefore, for it to be possible to train a mutual recommendation system to learn about mutual interests, tastes, and the like that are shared between users, dynamic representations of both users must be modeled based on the session corresponding to each match. This complex modeling of user behavior makes the training of a mutual recommendation system less efficient.

Below, to address the above-described problems, a new session-based mutual recommendation system, CUPID, is proposed. To satisfy latency-related requirements, CUPID can divide the process of computing a user representation into: (1) a user feature embedding layer that captures user information from a user session, and (2) a session feature embedding layer that asynchronously models the user's session information. In this way, it is possible for the computation of user representations to satisfy strict latency requirements in a deployment environment. Below, an apparatus implementing CUPID is referred to as a "mutual recommendation apparatus," a method that carries out CUPID is referred to as a "mutual recommendation method," and a "mutual recommendation system" can be used interchangeably with "CUPID." In addition, unless otherwise stated, any action for which a mutual recommendation system is described as the entity carrying out can be interpreted as an action carried out by a mutual recommendation apparatus.

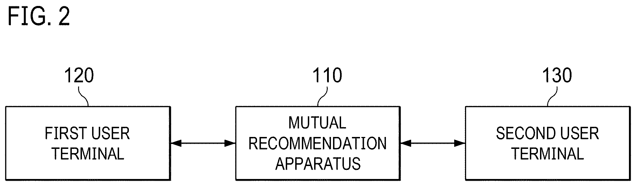

FIG. 2 is a drawing that shows a schematic configuration of a system comprising a mutual recommendation apparatus according to one embodiment.

The mutual recommendation apparatus (110) can connect users who want a conversation. More precisely, the mutual recommendation apparatus (110) can connect a first user terminal

(120) and a second user terminal (130) via electronic communication. For convenience of description, below, the term "first user" refers to the first user terminal (120), and the term "second user" refers to the second user terminal (130). For example, suppose that U represents a set of users of a matching service, and $U(t)=\{u_1, u_2, ..., u_n\}$ is a matching pool consisting of n users in U who are able to converse immediately at time t. The matching pool U(t) may change in real time or continuously, as users log in or exit the service, previous conversations end, and other relevant factors come into play.

In the case of a session-based mutual recommendation, each user $u_i$ in the matching pool U(t) has a series of user information $X_i$ (for example gender, age, matching statistical features) and a series of session information $S_i=[m_{i,1}, m_{i,2}, ..., m_{i,h}]$; this can be expressed as $X=\{X_i; S_i\}$. Each match history item m of $S_i$ may comprise information about the conversation time $y_{ij}$ between user $u_i$ and counterpart $u_j$.

The mutual recommendation apparatus (110) may operate with the aim of matching suitable users from the matching pool U(t) with one another in view of their user information and match history items. To this end, the recommendation model f of the mutual recommendation apparatus (110) can estimate the satisfaction score $s_{ij}$ for all possible user pairs $(u_i, u_j)$ among the n users in U(t), according to Equation 1.

[Equation 1]

$$s_{ij}=f(u_i, u_j)$$

The purpose of the recommendation model f is to accurately estimate the satisfaction scores of the potential user pairs. "Satisfaction score" can have various meanings and can be computed in various ways. For example, assuming that users will have longer conversations if they are satisfied with their conversation partner, a satisfaction score can be computed as the conversation time $y_{ij}$ of user pair $(u_i, u_j)$. Accordingly, the purpose of the recommendation model f can be defined by inputting the satisfaction score $s_{ij}$ of Equation 1 as the predicted conversation time $\hat{y}_{ij}$.

[Equation 2]

$$\hat{y}_{ij}=f(u_i, u_j)$$

Subsequently, the mutual recommendation apparatus (110) can connect users based on a matching algorithm (for example, a greedy algorithm or a blossom algorithm) selected according to the design of the matching service design that uses the predicted conversation time $\hat{y}_{ij}$.

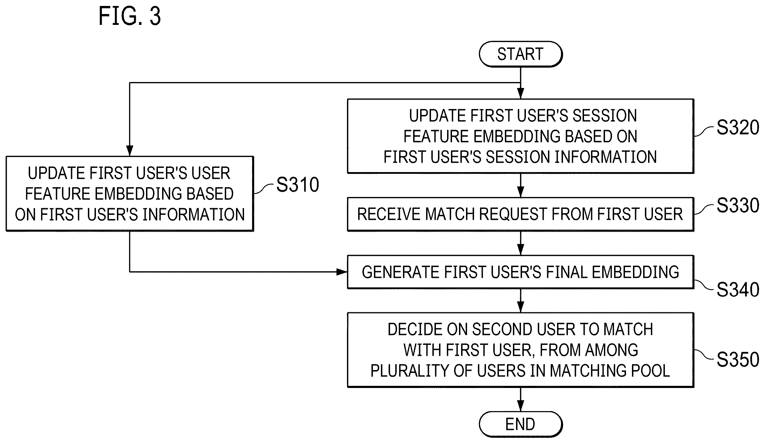

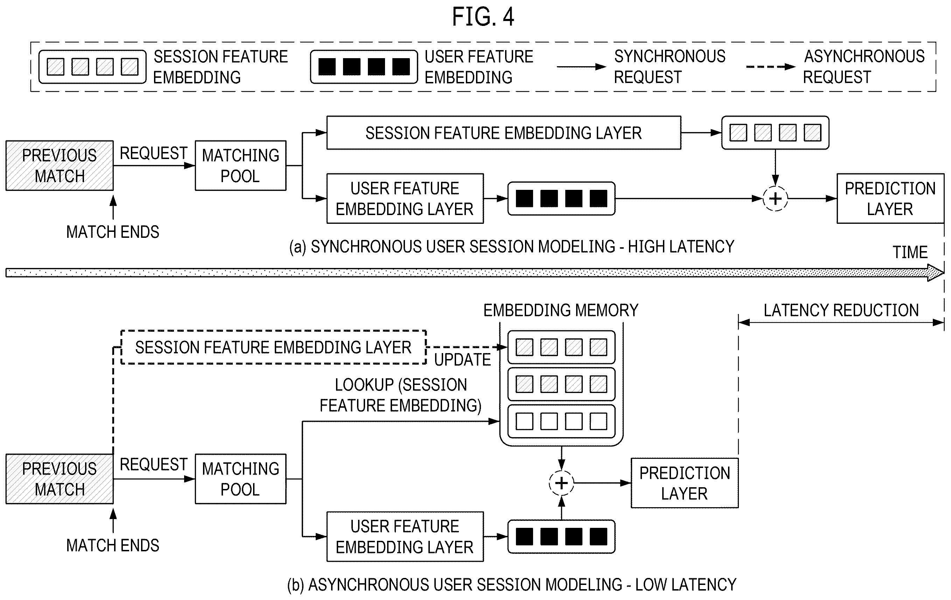

FIG. 3 is a flowchart illustrating a mutual recommendation method according to one embodiment. For convenience of explanation, below, the mutual recommendation apparatus (110) is described as an illustrative example of an entity carrying out the mutual recommendation method. This also applies equally to the descriptions with reference to FIGS. 4 through 12. However, the entity carrying out the mutual recommendation method is not thereby limited to the mutual recommendation apparatus (110).

In step S310, the mutual recommendation apparatus (110) updates the user feature embedding of the first user based on the user information of the first user.

In the present invention, the user information of the first user may comprise personal information corresponding to the profile of the first user and preference information corresponding to the matching conditions that the first user prefers. In the present invention, preference information may for example comprise conditions relating to the gender, location (for example address or current location), and age of a counterpart with whom the user wishes to match. In some embodiments, the preference information may be input together with the first user's match request; in this case, after the match request from the first user, a user feature embedding may be computed and updated based on the preference information.

The mutual recommendation apparatus (110) may also update both the user feature embedding based on the personal information of the first user, and the user feature embedding based on the preference information of the first user, after the match request of the first user; alternatively, it may update any one of them before the match request of the first user.

For example, in the mutual recommendation apparatus (110), the user feature embedding based on the personal information of the first user may be updated after the first user's match request, and the user feature embedding based on the first user's preference information may be updated before the first user's match request. By way of another example, in the mutual recommendation apparatus (110), the user feature embedding based on the personal information of the first user may be updated before the first user's match request, and the user feature embedding based on the first user's preference information may be updated after the first user's match request. By way of a further example, in the mutual recommendation apparatus (110), both the user feature embedding based on the personal information of the first user and the user feature embedding based on the first user's preference information may be updated after the first user's match request. This is because the user's personal information is unrelated to the history of matches between users, so the embedding vector related to the personal information does not need to be computed after each match, and in addition less time is taken for computing it.

In step S320, the mutual recommendation apparatus (110) updates the session feature embedding of the first user asynchronously with the user feature embedding of the first user, based on the session information of the first user. In the present invention, "session information" may encompass at least some of: information associated with the user's user information and the counterpart's user information, and information related to the matching session of the user and the counterpart (for example conversation time). The match history item m described above with reference to FIG. 2 is an illustrative example of information encompassed in the session information.

According to one embodiment, the mutual recommendation apparatus (110) may generate a match embedding corresponding to each of the first user's respective previous matches, based on the match history of the first user, which is included in the session information of the first user; generate an initial match embedding that reflects the start of the match history, and a session feature embedding of the first user based on the match embeddings; store the session feature embedding of the first user in an embedding memory.

Specifically, the mutual recommendation apparatus (110) may generate a match embedding by inputting the user features of the first user, and the user features of the counterpart in each of the first user's previous matches, into a first model that comprises a linear model and a forward neural network model, so as to output respective match embeddings that correspond to each of the first user's previous matches.

In addition, in generating the first user's session feature embedding, the mutual recommendation apparatus (110) may input the initial match embedding and the match embeddings into a second model based on a transformer architecture, so as to output the first user's session feature embedding.

In addition, in storing the first user's session feature embedding in the embedding memory, if there is a previously stored session feature embedding of the first user in the embedding memory, then the mutual recommendation apparatus (110) may replace the previously stored session feature embedding of the first user with the newly generated session feature embedding of the first user.

In step S330, the mutual recommendation apparatus (110) receives a match request from the first user.

In step S340, the mutual recommendation apparatus (110) generates a final embedding of the first user based on the first user's user feature embedding and the first user's session feature embedding. Specifically, the mutual recommendation apparatus (110) can generate a final embedding of the first user by summing the first user's user feature embedding and the first user's session feature embedding queried from the embedding memory pursuant to the first user's match request.

In step S350, the mutual recommendation apparatus (110) decides on a second user to be matched with the first user, from among the plurality of users, based on the final embedding of the first user and the final embeddings of the plurality of users included in the matching pool with the first user.

According to one embodiment, the mutual recommendation apparatus (110) may predict a satisfaction score for the first user and each of the plurality of users based on the final embedding of the first user and the respective final embeddings of the plurality of users included in the matching pool, and may decide on the second user as that user, from among the plurality of users, that has the highest predicted satisfaction score with the first user.

"Satisfaction score" can be defined in various ways; by way of an example, the satisfaction score can be defined as the length of the conversation time between users. This score is based on the final embeddings of the two users who are the subject of the conversation time prediction; by way of one example, the first user's respective conversation time with each one of the plurality of users included in the matching pool can be predicted as the scalar product (dot product) of the final embedding of each of the plurality of users with the final embedding of the first user. Alternatively, by way of another example, it may be predicted as the scalar product of the linear transformation of the first user's final embedding with the respective linear transformation of each of the final embeddings of the plurality of users. By way of further example, it may also be predicted as an exponential transformation of the scalar product of the linear transformation of the first user's final embedding with the respective linear transformation of each of the final embeddings of the plurality of users.

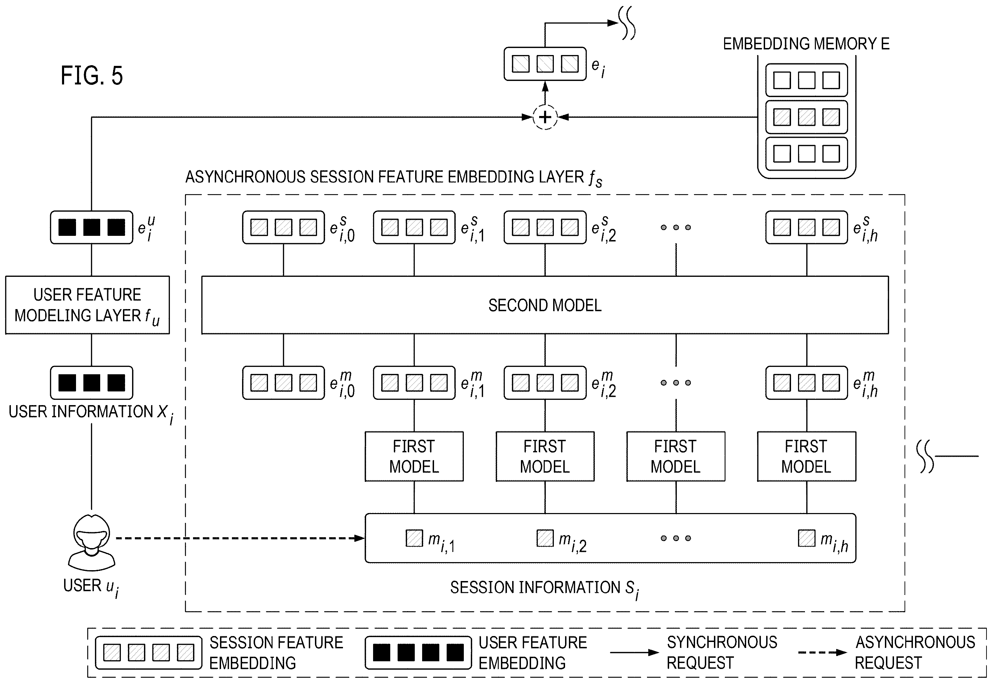

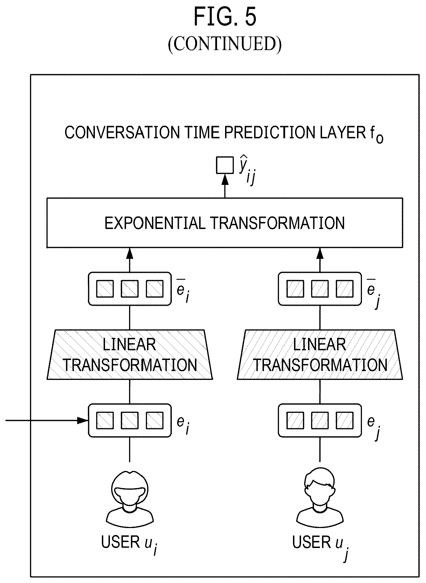

A key task of a session-based mutual recommendation system is to efficiently model short-term user behavior in a user session so as to capture user preferences, intentions, and the like. What must be considered in this context is that (1) the satisfaction scores must be computed with low latency for all possible user pairs in the matching pool, and (2) modeling user sessions a using sequential modeling architecture (for example, RNN or Transformer) is slower than conventionally capturing user preferences from tabular user information. FIGS. 4 and 5 below are examples of architectures for the mutual recommendation system CUPID that have been designed in view of these considerations.

FIG. 4 is an illustrative drawing showing an architecture for synchronous user session modeling, and an architecture for asynchronous user session modeling. Specifically, FIG. 4(b) presents an architecture in which user session modeling is separated from the synchronous matching pipeline, in contrast to FIG. 4(a).

If information for capturing session information such as user behavior or the like is provided together with user information, the speed of the entire recommendation pipeline may be reduced, as FIG. 4(a) shows. To solve this problem, user session modeling can be processed asynchronously separately from the synchronous matching pipeline, as shown in FIG. 4(b). In this way, the mutual recommendation system can reduce latency in an actual deployment environment.

Specifically, according to the architecture of FIG. 4(a), if a user requests a new match after a previous match has ended, then even after the user information has been processed in the user feature embedding layer and the user feature embedding has been generated, the session information must be processed in the session feature embedding layer; accordingly, it takes a relatively long time until the satisfaction score is predicted by the prediction layer. In contrast, according to the architecture of FIG. 4(b), separately from user information being processed in the user feature embedding layer to generate a user feature embedding, the session information can be processed in the session feature embedding layer to asynchronously generate a session feature embedding, and can be stored (or updated) in the embedding memory. Separately from the generation of user feature embeddings, the mutual recommendation system can transmit a lookup request to the embedding memory to query a session feature embedding and can consequently receive a session feature embedding that can be used to decide on a match counterpart. In other words, the satisfaction score can be predicted by the prediction layer, without waiting for the session feature embedding to be generated, by directly querying the session feature embedding.

FIG. 5 is an illustrative drawing concretely illustrating an architecture for asynchronous user session modeling.

CUPID achieves low latency in mutual recommendations by modeling user sessions asynchronously with match requests. If the previous match of user $u_i$ ends and the history is generated, then the session representation vector (session feature embedding) $e^s_i$ of the user $u_i$ can be computed via the asynchronous session feature embedding layer $f_s$. Specifically, each match history item $m$ of the session information $S_i$ of the user $u_i$ can be embedded into a match embedding $e_m$ via a first model (for example a Wide & Deep model). In this case, the first model can take into account the user information $X_i$ of user $u_i$ and the user information $X_j$ of user $u_j$. Subsequently, session feature embedding $e^s_i$ can be computed from the initial match embedding $e^m_{i,0}$ and a series of match embeddings $[e^{m}{}_{i,1}, e^{m}{}_{i,2}, ..., e^{m}{}_{i,h}]$ by means of a second model (for example, the GPT-2 causal (unidirectional) transformer model). The initial match embedding is a trainable special token representation that may mark the start of a match history, similarly to the <BOS> token in GPT-2.

The purpose of choosing a causal transformer as the second model is to take into account the influence of previous matches while ignoring the influence of future matches. This can be expressed as shown in Equation 3 below.

[Equation 3]

$$f_s(S_i) = [e^s_{i,0}, e^s_{i,1}, e^s_{i,2}, ..., e^s_{i,h}] = 제2모델([e^m_{i,0}, e^m_{i,1}, e^m_{i,2}, ..., e^m_{i,h}])$$

[Image text: second model]

Each output of the second model is influenced only by the previous match history; accordingly, esk may represent the session feature embedding at the point in time at which the kth match of user $u_i$ has been completed. In addition, the mutual recommendation system can use $e^s_{i,h}$ as session feature embedding $e^s_i$ of user $u_i$.

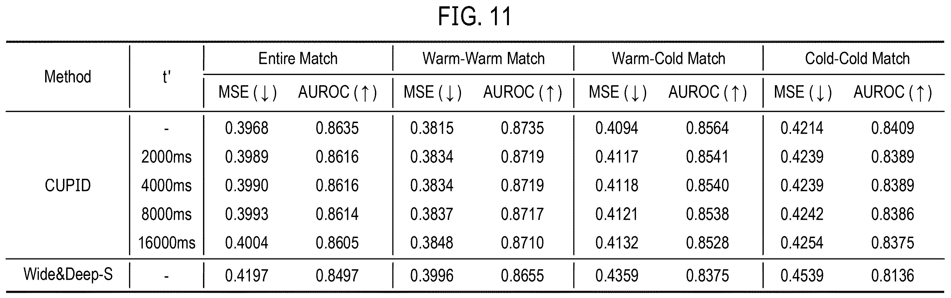

The mutual recommendation system can store the session feature embedding $e^s_i$ in the embedding memory E. If a previously computed session feature embedding of user $u_i$ exists in the embedding memory E, then this can be updated with the newly computed $e^s_i$. Subsequently, if user $u_i$ requests a new match, then $e^s_i$ can be queried from the embedding memory E to predict the conversation time. Because the computation of the session feature embedding may be incomplete until a new match is requested, there may be cases in which the session feature embedding has not been updated before the session feature embedding is queried in the embedding memory. Such a session feature embedding is referred to as a "delayed session feature embedding"; further below, the resulting change in CUPID's performance due to this is examined with reference to FIG. 11.

The mutual recommendation system may also use user information, which comprises at least some of: the user's demographic characteristics (for example gender and age), personal information corresponding to the user's profile, statistics on the user's match history, and the user's preferred matching conditions. The mutual recommendation system can generate user feature embedding eui via the user feature embedding layer $f_u$. This can be summarized as shown in Equation 4 below. In $f_u$, a model with the same structure as the first model may be used.

[Equation 4]

$$e^u_i = f_u(X_i)$$

The mutual recommendation system can generate the final embedding $e_i$ of user $u_i$ by summing the user feature embedding eui with the session feature embedding $e^s_i$, which was queried from the embedding memory E. In addition, the mutual recommendation system can generate a final embedding $e_j$ of user $u_j$ that is in the matching pool along with user $u_i$, by following the same process for user $u_j$ as for user $u_i$. In order to quickly compute a satisfaction score for all potential user pairs $(u_i, u_j)$ in the matching pool U(t), the mutual recommendation system can then, via the conversation time prediction layer $f_o$, either conduct a linear transformation on the inner product of the respective final embedding of each user, or obtain the inner product of the respective linear transformations of the final embedding of each user. The former case can be summarized as shown in Equation 5 below.

[Equation 5]

$$\hat{y}_{ij} = f(u_i, u_j) = w(e_i \cdot e_j) + b$$

Here, ei and ej represent the d-dimensional final embeddings of users $u_i$ and $u_j$, respectively, and w and b are trainable parameters. From this, the satisfaction scores for all potential user pairs in the matching pool can be efficiently computed by matrix multiplication, as in Equation 6 below.

[Equation 6]

$$\hat{Y} = w E^T E + b$$

Here, E(n*d dimensions) is an embedding matrix that includes the final embeddings of n users in matching pool U(t), and Y(n*n dimensions) is a matrix of predicted satisfaction scores for all user pairs. This matrix multiplication can be implemented efficiently, for example using a BLAS library.

In contrast to Equation 5, here the mutual recommendation system can also compute the satisfaction scores by obtaining the inner product of the respective linearly transformed final embedding of each user. Specifically, the mutual recommendation system can predict the conversation time between two users using the final embedding of a given user pair $(u_i, u_j)$, by means of the conversation time prediction layer $f_o$. A simple approach to predicting the conversation time between two users is the method of computing the inner product (dot product) of the respective final embeddings. However, because final embeddings tend to overestimate conversation times between similar users, this approach risks compromising recommendation diversity by impeding the capture of mutual interests shared between users,. To address this issue, by linearly projecting each user's final embedding into a separated latent space, a mutual recommendation system can capture mutual interests shared between users more effectively. In other words, the final embedding of each user is linearly transformed; this can be summarized as shown in Equation 7 below.

[Equation 7]

$$\bar{e}_i = W_1 e_i + b_1, \bar{e}_j = W_2 e_j + b_2$$

Here, $w_1$ and $b_1$ are the weight matrix and bias for projecting the embedding of user $u_i$; $w_2$ and $b_2$ represent the weight matrix and bias for projecting the embedding of user $u_j$. In addition, the conversation time can be estimated as the inner product of the mapped embedding $\bar{e}_i$ and $\bar{e}_j$, as shown as in Equation 8 below.

[Equation 8]

$$\hat{y}_{ij} = \bar{e}_i \cdot \bar{e}_j$$

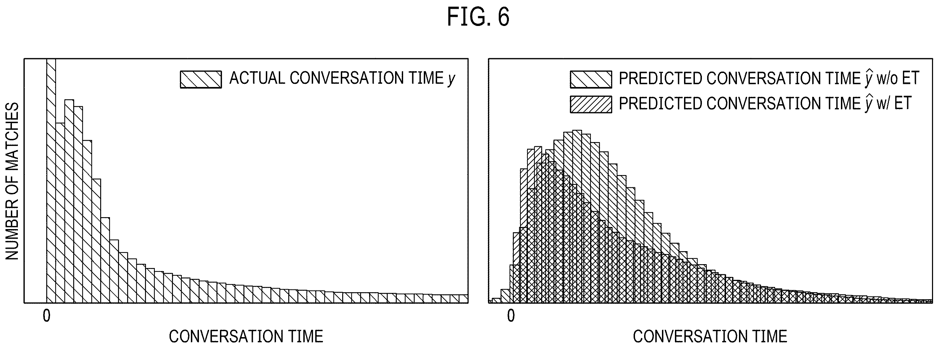

FIG. 6 is an illustrative drawing showing a distribution of predicted conversation time and actual conversation time among users.

Inefficiencies can arise during the process of training the conversation time prediction layer $f_o$. As depicted in FIG. 6, although the conversation time in an actual matching service follows a long-tailed distribution, the conversation time predicted by the inner product of the embeddings of two users tends to follow a distribution similar to a normal distribution. This means that if the embedding elements of each user are independent and have the same distribution (i.e., if they are random variables), then the inner product of the two embeddings converges on a normal distribution according to the Central Limit Theorem. As a result, if a mismatch occurs between the actual distribution and the predicted distribution of conversation times, then the process of training the layers of the mutual recommendation system may not be effective. Accordingly, to enable the conversation time prediction layer $f_o$ to accurately be trained on the actual distribution of conversation times, it is necessary to apply an exponential transformation to the conversation times predicted based on the inner product. This can be summarized as shown in Equation 9 below.

[Equation 9]

$$\hat{y}_{ij} = f_o(e_i, e_j) = \mathrm{Exp}(w(\bar{e}_i \cdot \bar{e}_j) + b)$$

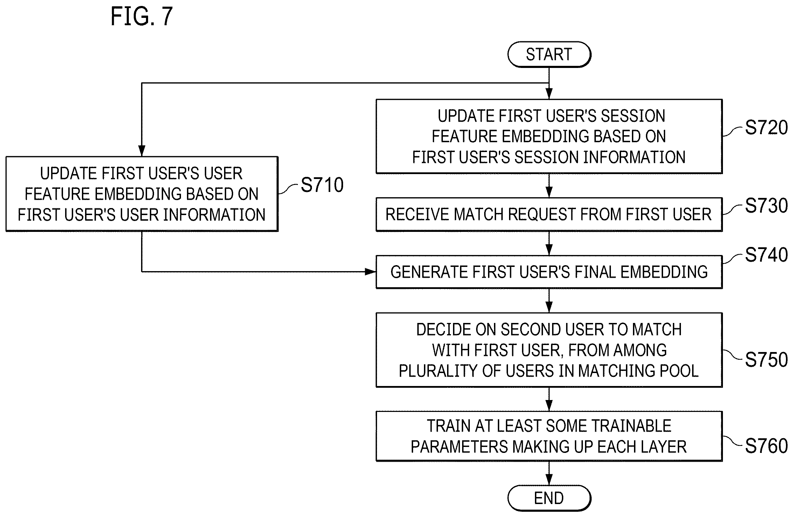

Here, w and b are trainable values for adjusting the distribution of predicted conversation times. Because exponential transformation of scalar scores is a light calculation, the increase in latency owing to the exponential transformation is negligible. The training process using the predicted conversation time and the actual conversation time is described in greater detail below, with reference to FIG. 7.

FIG. 7 is a flowchart illustrating a mutual recommendation method according to an additional embodiment.

In step S710, the mutual recommendation apparatus (110) updates the user feature embedding of the first user based on the user information of the first user.

In step S720, the mutual recommendation apparatus (110) updates the session feature embedding of the first user asynchronously with the user feature embedding of the first user, based on the session information of the first user.

In step S730, the mutual recommendation apparatus (110) receives a match request from the first user.

In step S740, the mutual recommendation apparatus (110) generates a final embedding of the first user based on the first user's user feature embedding and the first user's session feature embedding.

In step S750, the mutual recommendation apparatus (110) decides on a second user to be matched with the first user, from among the plurality of users, based on the final embedding of the first user and the final embeddings of the plurality of users included in the matching pool with the first user.

In step S760, the mutual recommendation apparatus (110) trains at least some of the trainable parameters constituting the user feature embedding layer, the session feature embedding layer, and the conversation time prediction layer, based on a loss function using the error between the predicted conversation time and the actual conversation time.

In one embodiment, the mutual recommendation apparatus (110) can train a layer using the mean squared error (MSE) between the predicted conversation time and the actual conversation time as a loss function. Specifically, the loss function can be expressed by Equation 10 below.

[Equation 10]

$$L_{MSE} = \frac{1}{|D|} \sum_{m \in D} (\hat{y}_{ij} - y_{ij})^2$$

Here, D is a training data set constructed from all the match history items in the matching pool U.

In one embodiment, in the layer training process, the mutual recommendation apparatus (110) may augment data for training based on the loss function by additionally predicting the conversation time in the Nth match of a particular user, using the session feature embedding corresponding to the match previous to the Nth match of that particular user (where N is a natural number of at least 2). In other words, in predicting the "conversation time in the Nth match of a particular user" to be used for training, in addition to predicting the conversation time using the user feature embedding corresponding to the Nth match of the particular user and the session feature embedding corresponding to the Nth match, the conversation time in the particular user's Nth match is also predicted using the session feature embedding corresponding to the N-1th match, the session feature embedding corresponding to the N-2th match, and so forth, together with the user feature embedding corresponding to the Nth match of the particular user. In this way, multiple predictions of the conversation time for the particular user's Nth matching can be made using session feature embeddings from various match times, and an effect of augmenting the training data can be obtained by using each respective predicted conversation time for training.

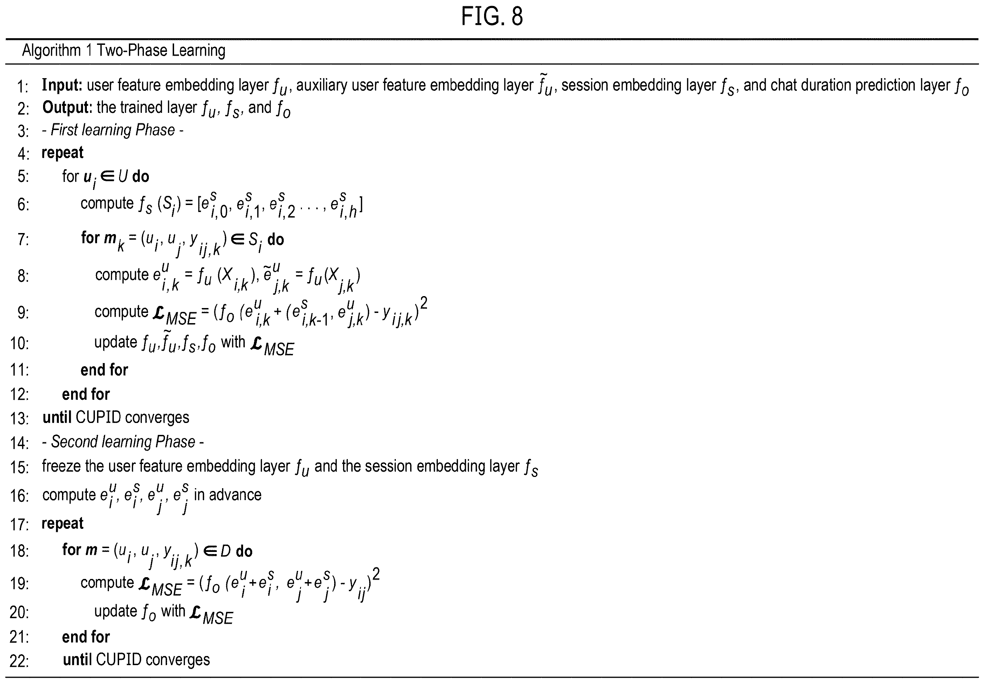

In one embodiment, the mutual recommendation apparatus (110) can perform train a layer in two steps. First, the mutual recommendation apparatus (110) can train at least some of the trainable parameters constituting: a user feature embedding layer, an auxiliary feature embedding layer, a session feature embedding layer, and a conversation time prediction layer based on a loss function using the error between the predicted conversation time and the actual conversation time (first learning phase). Next, the mutual recommendation apparatus (110) can train at least some of the trainable parameters constituting the conversation time prediction layer while holding constant the user feature embedding layer and the session feature embedding layer (second learning phase). This will be described in detail below with reference to FIG. 8 below.

FIG. 8 is an illustrative drawing of an algorithm for training a layer for mutual recommendation.

As described above with reference to FIG. 1b, in a session-based recommendation, a user's session representation may change with each match, which may result in inefficient training. For example, to learn the match history items m of user $u_i$ and user $u_j$, the corresponding session information $S_i$ and $S_j$ must be modeled individually. Computational cost may be incurred if this process is carried out for every match history item in the training data set. To resolve this problem, segmenting the learning process of the mutual recommendation system into two steps may be considered, as follows:

(first learning phase)

The principal aim of the first learning phase is to efficiently train the synchronous user feature embedding layer $f_u$ and the asynchronous session feature embedding layer $f_s$. To this end, an auxiliary user feature embedding layer

$$\tilde{f}_u$$

can be used to initially train the layers assuming that a counterpart conversing with the user $u_i$ does not integrate its own session information. Thus, rather than using $(\{X_i; S_i\}, \{X_j; S_j\})$ for each user pair $(u_i, u_j)$ in the match history item m, $(\{X_i; S_i\}, X_j)$ is used, excluding the session information $S_j$ of the counterpart $u_j$. This training method exploits the characteristics of causal transformers; in this way, it can be made possible to efficiently obtain the session feature embedding $e^s_i$ of user $u_i$ by

carrying out the transmission process for the user only once. The loss function computed in the first learning step can be represented as in Equation 11. By means of this loss function, $f_u$, $\tilde{f}_u$, $f_s$, and $f_o$ can be updated (more precisely, at least some of the trainable parameters that make up each layer can be updated).

[Equation 11]

$$L_{MSE} = \frac{1}{|D|} \sum_{u_i \in U} \sum_{m_k \in S_i} (f_o(e^u_{i,k} + e^s_{i,k-1}, \tilde{e}^u_{j,k}) - y_{ij,k})^2$$

Here, subscript k represents information about the kth match history item, and $\tilde{e}^u_{j,k}$ represents the user feature embedding of user $u_j$ as computed by the auxiliary user feature embedding layer. The auxiliary user feature embedding layer may comprise the same architecture as the user feature embedding layer. In Equation 11 above, the session feature embedding $e^s_{i,k-1}$ of user $u_i$, corresponding to the k-1th match history item, is used along with the synchronously computed user feature embedding $e^u_{i,k}$ to predict the conversation time $y_{ij}$ of the kth match history item.

(second learning phase)

The principal aim of the second learning phase is to additionally train a conversation time prediction layer $f_o$ by using both of the session informations $S_i$, $S_j$ from the match history item m of the user pair $(u_i, u_j)$. The loss function computed in the second learning phase can be represented by Equation 12 below. By means of this loss function, $f_o$ can be updated (more precisely, at least some of the trainable parameters that make up the conversation time prediction layer can be updated).

[Equation 12]

$$L_{MSE} = \frac{1}{|D|} \sum_{u_i \in U} \sum_{m_k \in S_i} (f_o(e^u_{i,k} + e^s_{i,k-1}, e^u_{j,k} + e^s_{j,k-1}) - y_{ij,k})^2$$

In other words, in the second learning phase, the auxiliary user feature embedding layer

$$\tilde{f}_u$$

of the first learning phase can be discarded, and the user feature embedding layer $f_u$ and the session feature embedding layer $f_s$ can be frozen (or held constant). In this way, training efficiency can be enhanced by extracting the embeddings $e^u$ and $e^s$ in advance.

The effects of training over the above-described two steps are as follows.

In user session modeling, because computing the second model takes up a significant portion of the overall process computation, for purposes of efficient training it is necessary to reduce the number of inferences of the second model. If, in conventional training without two-step training, the number of learning epochs is N, then let the respective numbers of learning epochs in the first and second learning phases in two-step learning be $N_1$ and $N_2$, respectively, let |D| be the number of match history items in the training data set, and let $|\overline{S}|$ be the average number of match history items in a user session; the inference count for each type of training can then be computed as follows.

First, in conventional training without two-step training, 2N*|D| inferences are needed in order to obtain the session feature embeddings of the two users for all |D| match history items. In contrast, in the first learning phase, session feature embeddings are computed only for the user and not for the counterpart, and session feature embeddings for a plurality of match history items of the user can be obtained with just one inference; consequently, only $N_1$*|D|/$|\overline{S}|$ inferences are required. Moreover, because user embeddings can be computed in advance by freezing the session feature embedding layer and the user feature embedding layer in the second learning phase, only 2*|D|/$|\overline{S}|$ inferences are required in the second learning phase, irrespective of $N_2$. Overall, compared to conventional training, in two-step training the number of inferences in the second model can be reduced by 2N*$|\overline{S}|$/($N_1$+2). If it is assumed that N=$N_1$=10 and $|\overline{S}|$=50, applying two-step training can reduce the second model's inference count by 98.8%. This makes effective training of CUPID possible even when processing a large-scale data set.

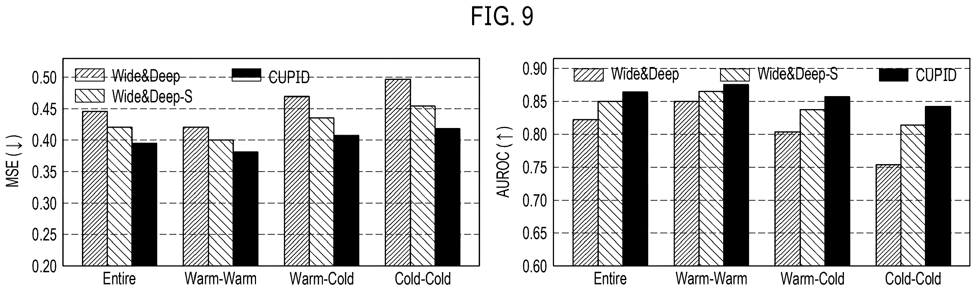

*136 FIGS. 9 to 12 are drawings that comparatively analyze the performances of the mutual recommendation method according to an embodiment, and other methods. Below, "mutual recommendation method" refers to a method using CUPID.

FIG. 9 shows the result of evaluating the performance of a method using CUPID and methods using other models, for four different types of matching. To measure model performance, two metrics were used: Mean Squared Error (MSE) and Area Under the Receiver Operating Characteristic (AUROC). MSE measures the mean squared error between the actual conversation time and the predicted conversation time. As can be seen in FIG. 6, the distribution of conversation times follows a long-tailed distribution, indicating that many conversations do not draw users' interest. Accordingly, in this evaluation, a binary classification task was carried out for each method, to predict whether each conversation was meaningful. Next, the classification performance of each method was measured by AUROC. A meaningful conversation in this case was defined as one that lasted for a conversation time of at least 120 seconds.

Reviewing FIG. 9, performances are shown for each of four types of matching: entire matching, warm-warm matching, warm-cold matching, and warm-cold matching. In other words, this shows matching between cold-start users and non-cold-start users (warm-start users). A user without a match history in the training data set was considered a cold-start user, and the remaining users were considered warm-start users. A lower MSE ($\downarrow$) and a higher AUROC($\uparrow$) may indicate a better model. The MSE scores were calculated based on conversation time (ms), on a log scale. These results show that it is difficult to capture mutual interests in a match involving cold-start users. Nonetheless, the method using CUPID greatly improved the accuracy of predicted conversation time for matches, including for cold-start users, owing to the use of session information. In particular, CUPID showed superior performance to other methods in both metrics, across all types of matching. Considering that a difference on the order of 0.001 in AUROC can lead to a significant performance gap in an actual service, the performance improvement as a result of applying CUPID is highly effective.

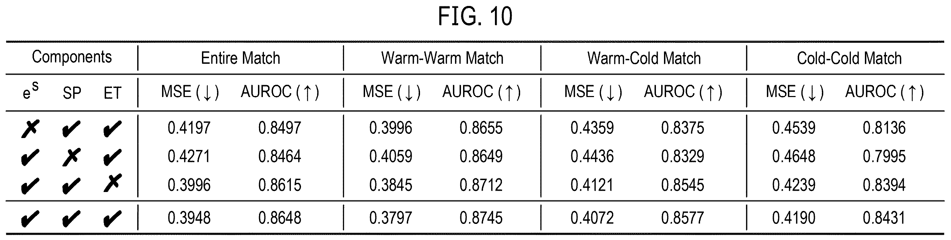

FIG. 10 shows the change in performance when each component of CUPID is removed, in order to verify the effect of the session feature embedding es, the second learning phase (SP, Second Learning Phase) of the two-step learning method, and the exponential transformation (ET).

To summarize, removing each component can degrade the performance of CUPID. Removing session feature embedding es has a significant impact on performance degradation, especially in matches that involve a cold-start user. These results emphasize the importance of capturing mutual interests by using user session information to model user behavior in a matching service where there are many cold-start users. Likewise, removing the SP in the two-step learning method significantly degrades performance, which indicates that it is useful to use the session information of both users to additionally train a conversation time prediction layer. Finally, it is apparent that if ET is removed, then a performance degradation occurs, so that simply applying an exponential transform to the model's predicted conversation time may improve performance. This is because the final predicted conversation time distribution matches the actual conversation time distribution more closely, which makes possible more consistent model training.

FIG. 11 shows the change in CUPID performance owing to a delayed session feature embedding.

Because in actual deployment environments, session feature embeddings are not always updated with recent match history, a user may request a new match before the session feature embedding is computed. In this case, the session feature embedding queried from the mutual recommendation system may not reflect the few most recent match history items. FIG. 11 shows the result of simulating a performance change owing to a delayed session feature embedding in an actual deployment environment. Assuming that the computational delay of the session feature embedding takes t' milliseconds, the conversation time of a user in matching pool U(t) at time t is predicted using the "delayed session feature embedding" computed using the match history that ended (t-t') earlier.

This has two noteworthy outcomes regarding model performance. First, it is apparent that the model's prediction performance decreases slightly with increasing delay time. However, this phenomenon is a result of a system design that separates the user session modeling from the synchronous matching pipeline. If this delay was absent, then slow computation for modeling user sessions could operate as a bottleneck, which could significantly increase latency. Accordingly, if the low latency requirement can be met, slightly decreased prediction performance may be a permissible compromise. Second, notwithstanding the performance degradation caused by delayed session feature embedding, CUPID still broadly surpasses the Wide&Deep-S model in all aspects of performance while exhibiting a similar latency.

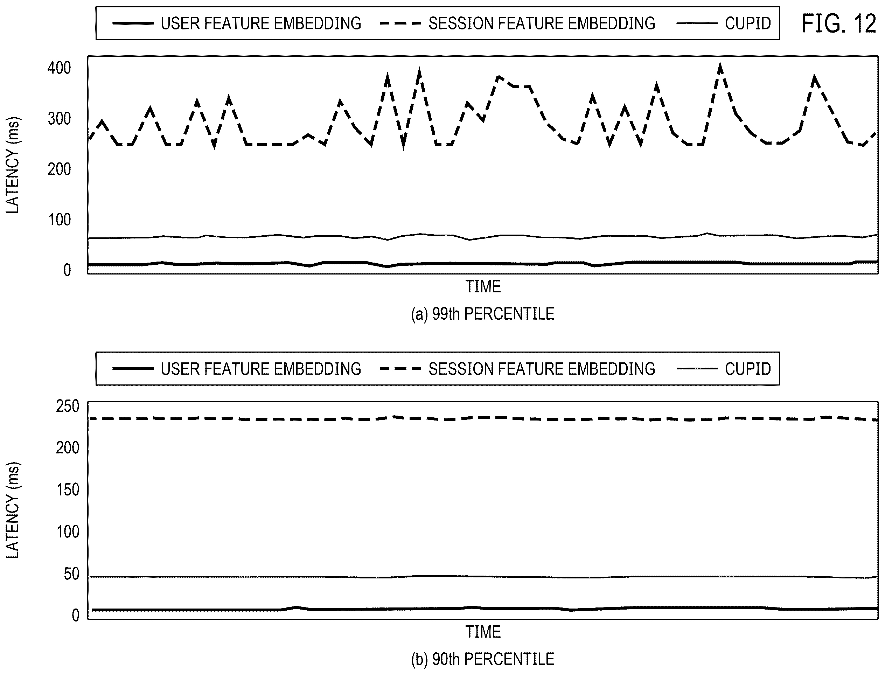

FIG. 12 shows the overall response latency of CUPID in an actual deployment environment, latency owing to computation of user feature embeddings, and latency owing to computation of session feature embeddings.

In FIG. 12, the latencies of two versions, denoted as the 99th and 90th percentiles (p99 and p90) of match requests, were respectively measured. The latency arising from computing user feature embeddings was measured at 17 ms and 9 ms for p99 and p90, respectively, while the latency arising from computing session feature embeddings was measured at 290 ms and 236 ms. As is apparent from this, if session feature embeddings for match requests are computed synchronously, then the overall latency of the matching pipeline will be predominantly affected by the latency of computing the session feature embeddings. In contrast, by calculating the session feature embeddings asynchronously, CUPID exhibited response latencies of 70 ms and 48 ms, reducing latencies for p99 and p90 by 75.9% and 79.7% respectively. In particular, although for the 99th percentile (p99) the computing latency for session feature embeddings can vary, CUPID exhibits stable latency as a result of using delayed session feature embeddings that are stored in the embedding memory. Accordingly, CUPID can contribute to making session-based recommendations with low latency possible in a matching service that requires significant computation to calculate satisfaction scores for all possible user pairs in the matching pool.

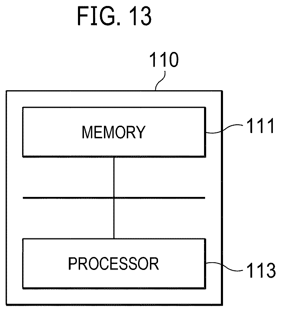

FIG. 13 is a block diagram illustrating a mutual recommendation apparatus according to one embodiment.

Referring to FIG. 13, the mutual recommendation apparatus (110) may comprise a memory (111) and a processor (113). In some embodiments, the mutual recommendation apparatus (110) may further comprise an input/output interface, and may exchange data between internal modules through the input/output interface, or it may be connected to an external apparatus for the exchange of data.

The processor (113) may carry out at least one of the methods described above with reference to FIGS. 1 through 12. The memory (111) may store information for carrying out at least one method described above with reference to FIGS. 1 through 12; it may be a volatile memory or a non-volatile memory.

The processor (113) may execute programs and control the mutual recommendation apparatus (110) to provide information. The code of the program executed by the processor (113) may be stored in the memory (11).

The processor (113) of the mutual recommendation apparatus (110) may be connected to the memory (111), and:may update a user feature embedding of a first user based on user information of the first user; asynchronously update the session feature embedding of the first user with the user feature embedding of the first user, based on the session information of the first user; receive a match request from the first user; generate a final embedding of the first user based on the user feature embedding of the first user and the session feature embedding of the first user; and decide on a second user to be matched with the first user, from among the plurality of users, based on the final embedding of the first user and the respective final embeddings of the plurality of users included in the matching pool with the first user.

The mutual recommendation apparatus (110) depicted in FIG. 13 depicts only those elements relevant to the present embodiment. Accordingly, a person of ordinary skill in the art to which the present embodiment relates will be able to understand that it may further comprise other general-purpose elements in addition to the elements depicted in FIG. 13.

More specifically, the apparatus according to the above-described embodiment may comprise: a processor, a memory for storing and executing program data, a permanent storage such as a disk drive, a communication port that communicates with an external device, a touch panel, a key, a user interface device such as a button, or the like. Methods that are implemented as software modules or algorithms may be stored on a computer-readable recording medium as computer-readable codes or program commands that can be executed by the processor. Computer-readable recording media include magnetic storage media (for example read-only memory (ROM), random-access memory (RAM), floppy disks, hard disks, and the like) and optical reading media (for example CD-ROM, Digital Versatile Disc (DVD)), and the like. A computer-readable recording medium is distributed in computer systems connected via a network so that computer-readable codes may be stored and executed in a distributed manner. The medium is readable by a computer, and may be stored in the memory and executed by the processor.

The present embodiment may be represented by functional block elements and various processing steps. Such functional blocks may be implemented as any number of various hardware and/or software elements that execute the particular functions. For example, in the embodiment, integrated circuit configurations may be used, such as memory, processing, logic, look-up tables, and the like, that may execute various functions under the control of one or more microprocessors or other control devices. Similarly to how respective elements may be implemented as software programs or software elements, the present embodiment may be implemented in a programming or scripting language such as C, C++, Java, assembler, or the like, comprising various algorithms implemented as a combination of data structures, processes, routines or other programming elements. Functional aspects may be implemented as algorithms executed on one or more processors. Additionally, in the present embodiment, conventional techniques may be used for electronic environment settings, signal processing, message processing, and/or data processing and the like. Such terms as "mechanism," "element," "means," "element," and "configuration" can be used broadly and are not limited to mechanical and physical configurations. The above terms may encompass the meaning of a series of software processes (routines) in association with a processor or the like.

The above-described embodiments are only illustrative examples, and other embodiments may be implemented within the scope of the claims set forth below.

**Claims**

1. A method of mutually recommending users of a matching service, comprising:

   a step wherein a user feature embedding of a first user is updated based on user information of the first user;
   a step wherein the session feature embedding of the first user is asynchronously updated with the user feature embedding of the first user, based on the session information of the first user;

a step wherein a match request is received from the first user;

a step wherein a final embedding of the first user is generated based on the user feature embedding of the first user and the session feature embedding of the first user; and

a step wherein a second user to be matched with the first user is decided on from among the plurality of users, based on the final embedding of the first user and the respective final embeddings of the plurality of users included in the matching pool with the first user.

2. The mutual recommendation method according to Claim 1, wherein:

the user information of the first user comprises:

personal information corresponding to the profile of the first user and preference information corresponding to the matching conditions that the first user prefers.

3. The mutual recommendation method

according to Claim 2, wherein
the step wherein the user feature embedding of the first user is updated comprises:

a step wherein the user feature embedding is updated based on the personal information of the first user prior to the match request; and

a step wherein the user feature embedding is updated based on the preference information of the first user after the match request.

4. The mutual recommendation method according to Claim 2, wherein
the step wherein the user feature embedding of the first user updated comprises:
a step wherein, after the match request, a user feature embedding based on the personal information of the first user, and a user feature embedding based on the preference information, are updated.

5. The mutual recommendation method according to Claim 1, wherein
the step wherein the session feature embedding of the first user is updated comprises:
a step wherein, after the match of the first user has ended, the session feature embedding of the first user is updated based on the session information of the first user, which reflects the history of the ended match.

6. The mutual recommendation method according to Claim 5, wherein
the step wherein the session feature embedding of the first user is updated comprises:

a step wherein a match embedding corresponding to each of the first user's respective previous matches is generated based on the match history of the first user, which is included in the session information of the first user;

a step wherein there are generated an initial match embedding that reflects the start of the match history, and a session feature embedding of the first user based on the match embeddings; and

a step wherein the session feature embedding of the first user is stored in an embedding memory.

7. The mutual recommendation method according to Claim 6, wherein
the step wherein the match embeddings are generated comprises:
a step wherein the user features of the first user and the user features of the counterpart, in each of the first user's respective previous matches, are input into a first model that comprises a linear model and a forward neural network model, to output the match embeddings.

8. The mutual recommendation method according to Claim 6, wherein
the step wherein the session feature embedding of the first user is generated comprises:
a step wherein the initial match embedding and the match embeddings are input into a second model based on a transformer architecture, to output the session feature embedding of the first user.

**EP 4 708 187 A1**

9. The mutual recommendation method according to Claim 6,
wherein
the step of storing comprises:
a step wherein, if there is a previously stored session feature embedding of the first user in the embedding memory, then the newly generated session feature embedding of the first user replaces the previously stored session feature embedding of the first user.

10. The mutual recommendation method according to Claim 1,
wherein
the final embedding of the first user
is generated by summing the user feature embedding of the first user and the session feature embedding of the first user queried from the embedding memory pursuant to the match request.

11. The mutual recommendation method according to Claim 1,
wherein
the step wherein the second user is decided on comprises:

a step wherein a satisfaction score of the first user is predicted for each respective user among the plurality of users, based on the final embedding of the first user and the respective final embedding of each of the plurality of users; and
a step wherein the user, from among the plurality of users, that has the highest predicted satisfaction score with the first user is decided on as the second user.

12. The mutual recommendation method according to Claim 11,
wherein
the satisfaction score is the predicted conversation time, and the conversation time is predicted as:
the scalar product (dot product) of the respective final embedding of each of the plurality of users with the final embedding of the first user.

13. The mutual recommendation method according to Claim 11,
wherein
the satisfaction score is the predicted conversation time, and the conversation time is predicted as:
the scalar product of a linear transformation of the respective final embedding of each of the plurality of users with a linear transformation of the final embedding of the first user.

14. The mutual recommendation method according to Claim 11,
wherein
the satisfaction score is the predicted conversation time, and the conversation time is predicted by:
exponentially transforming the scalar product of a linear transformation of the respective final embedding of each of the plurality of users with a linear transformation of the final embedding of the first user.

15. The mutual recommendation method according to Claim 11,
further comprising:
a step wherein at least some of the trainable parameters constituting the user feature embedding layer, the session feature embedding layer, and the conversation time prediction layer, are trained based on a loss function using the error between the predicted conversation time and the actual conversation time.

16. The mutual recommendation method according to Claim 15,
wherein
the loss function is:
the mean squared error (MSE) between the predicted conversation time and the actual conversation time.

17. The mutual recommendation method according to Claim 15,
wherein
the learning phase further comprises:
a step wherein data for training based on the loss function are augmented by additionally predicting the conversation time in the Nth match of a particular user, using the session feature embedding corresponding to the match previous to the Nth match of that particular user (where N is a natural number of at least 2).

**18.** The mutual recommendation method according to Claim 15,
wherein
the learning phase further comprises:

a first learning phase in which at least some of the trainable parameters constituting the user feature embedding layer, the auxiliary user feature embedding layer, the session feature embedding layer, and the conversation time prediction layer, are trained, and
a second learning phase in which the user feature embedding layer and the session feature embedding layer are held constant and at least some of the trainable parameters making up the conversation time prediction layer are trained.

**19.** A computer-readable non-transitory recording medium whereon a program is recorded for executing the method of Claim 1 on a computer.

**20.** An apparatus for mutual recommendation between users of a matching service,
comprising

a memory that stores commands and a processor,
wherein the processor is connected to the memory, and:

updates a user feature embedding of a first user based on user information of the first user;
asynchronously updates the session feature embedding of the first user with the user feature embedding of the first user, based on the session information of the first user;
receives a match request from the first user;
generates a final embedding of the first user based on the user feature embedding of the first user and the session feature embedding of the first user; and
decides on a second user to be matched with the first user, from among the plurality of users, based on the final embedding of the first user and the respective final embeddings of the plurality of users included in the matching pool with the first user.

FIG. 1a

TIME

ALICE

ALICE'S SESSION

FIXED ITEM CANDIDATE POOL

BOB

BOB'S SESSION

FIG. 1b

❄ : COLD USER

TIME

ALICE — ALICE'S SESSION — 20:13:14 — 20:14:18

MATCHING POOL AT 20:11:31
CAROL
ALICE

MATCHING POOL AT 20:13:20
BOB
CAROL

MATCHING POOL AT 20:14:18
BOB
ALICE

BOB — BOB'S SESSION

20:13:04    20:13:20    20:14:18

FIG. 2

## FIG. 3

```
                              ( START )
                                  │
                                  ▼
                    ┌──────────────────────────────┐
                    │   UPDATE FIRST USER'S SESSION │
                    │   FEATURE EMBEDDING BASED ON  │── S320
                    │  FIRST USER'S SESSION INFORMATION │
                    └──────────────────────────────┘
                                  │
  ┌──────────────────────┐        │
  │ UPDATE FIRST USER'S USER │     ▼
  │ FEATURE EMBEDDING BASED │──S310  ┌──────────────────────────────┐
  │ ON FIRST USER'S INFORMATION │    │ RECEIVE MATCH REQUEST FROM FIRST USER │── S330
  └──────────────────────┘          └──────────────────────────────┘
              │                               │
              │                               ▼
              └─────────────────────▶ ┌──────────────────────────────┐
                                      │ GENERATE FIRST USER'S FINAL EMBEDDING │── S340
                                      └──────────────────────────────┘
                                               │
                                               ▼
                                      ┌──────────────────────────────┐
                                      │  DECIDE ON SECOND USER TO MATCH │
                                      │   WITH FIRST USER, FROM AMONG   │── S350
                                      │ PLURALITY OF USERS IN MATCHING POOL │
                                      └──────────────────────────────┘
                                               │
                                               ▼
                                          ( END )
```

# FIG. 4

(a) SYNCHRONOUS USER SESSION MODELING - HIGH LATENCY

(b) ASYNCHRONOUS USER SESSION MODELING - LOW LATENCY

# FIG. 5

EMBEDDING MEMORY E

ASYNCHRONOUS SESSION FEATURE EMBEDDING LAYER $f_s$

$e_i$

$e_i^u$

USER FEATURE MODELING LAYER $f_u$

USER INFORMATION $X_i$

USER $u_i$

$e_{i,0}^s$   $e_{i,1}^s$   $e_{i,2}^s$   $\cdots$   $e_{i,h}^s$

SECOND MODEL

$e_{i,0}^m$   $e_{i,1}^m$   $e_{i,2}^m$   $\cdots$   $e_{i,h}^m$

FIRST MODEL   FIRST MODEL   FIRST MODEL   FIRST MODEL

$m_{i,1}$   $m_{i,2}$   $\cdots$   $m_{i,h}$

SESSION INFORMATION $S_i$

SESSION FEATURE EMBEDDING   USER FEATURE EMBEDDING   SYNCHRONOUS REQUEST   ASYNCHRONOUS REQUEST

FIG. 5
(CONTINUED)

CONVERSATION TIME PREDICTION LAYER $f_o$

$\hat{y}_{ij}$

EXPONENTIAL TRANSFORMATION

$\bar{e}_i$

$\bar{e}_j$

LINEAR TRANSFORMATION

LINEAR TRANSFORMATION

$e_i$

$e_j$

USER $u_i$

USER $u_j$

EP 4 708 187 A1

## FIG. 6

FIG. 7

START

S710 — UPDATE FIRST USER'S USER FEATURE EMBEDDING BASED ON FIRST USER'S USER INFORMATION

S720 — UPDATE FIRST USER'S SESSION FEATURE EMBEDDING BASED ON FIRST USER'S SESSION INFORMATION

S730 — RECEIVE MATCH REQUEST FROM FIRST USER

S740 — GENERATE FIRST USER'S FINAL EMBEDDING

S750 — DECIDE ON SECOND USER TO MATCH WITH FIRST USER, FROM AMONG PLURALITY OF USERS IN MATCHING POOL

S760 — TRAIN AT LEAST SOME TRAINABLE PARAMETERS MAKING UP EACH LAYER

END

# FIG. 8

EP 4 708 187 A1

---

Algorithm 1 Two-Phase Learning

---

1: **Input:** user feature embedding layer $f_u$, auxiliary user feature embedding layer $\tilde{f}_u$, session embedding layer $f_s$, and chat duration prediction layer $f_o$

2: **Output:** the trained layer $f_u$, $f_s$, and $f_o$

3: *- First learning Phase -*

4: **repeat**

5:    for $u_i \in U$ **do**

6:       compute $f_s(S_i) = [e_{i,0}^S, e_{i,1}^S, e_{i,2}^S \ldots, e_{i,h}^S]$

7:       **for** $m_k = (u_i, u_j, y_{ij,k}) \in S_i$ **do**

8:          compute $e_{i,k}^U = f_u(X_{i,k})$, $\tilde{e}_{j,k}^U = f_u(X_{j,k})$

9:          compute $\mathcal{L}_{MSE} = (f_o(e_{i,k}^U + (e_{i,k-1}^S, e_{j,k}^U) - y_{ij,k})^2$

10:         update $f_u, \tilde{f}_u, f_s, f_o$ with $\mathcal{L}_{MSE}$

11:       **end for**

12:    **end for**

13: **until** CUPID converges

14: *- Second learning Phase -*

15: freeze the user feature embedding layer $f_u$ and the session embedding layer $f_s$

16: compute $e_i^U, e_i^S, e_j^U, e_j^S$ in advance

17: **repeat**

18:    **for** $m = (u_i, u_j, y_{ij,k}) \in D$ **do**

19:       compute $\mathcal{L}_{MSE} = (f_o(e_i^U + e_i^S, e_j^U + e_j^S) - y_{ij})^2$

20:       update $f_o$ with $\mathcal{L}_{MSE}$

21:    **end for**

22:    **until** CUPID converges

---

## FIG. 9

## FIG. 10

| Components | | | Entire Match | | Warm-Warm Match | | Warm-Cold Match | | Cold-Cold Match | |
|---|---|---|---|---|---|---|---|---|---|---|
| $e^S$ | SP | ET | MSE ($\downarrow$) | AUROC ($\uparrow$) | MSE ($\downarrow$) | AUROC ($\uparrow$) | MSE ($\downarrow$) | AUROC ($\uparrow$) | MSE ($\downarrow$) | AUROC ($\uparrow$) |
| ✗ | ✔ | ✔ | 0.4197 | 0.8497 | 0.3996 | 0.8655 | 0.4359 | 0.8375 | 0.4539 | 0.8136 |
| ✔ | ✗ | ✔ | 0.4271 | 0.8464 | 0.4059 | 0.8649 | 0.4436 | 0.8329 | 0.4648 | 0.7995 |
| ✔ | ✔ | ✗ | 0.3996 | 0.8615 | 0.3845 | 0.8712 | 0.4121 | 0.8545 | 0.4239 | 0.8394 |
| ✔ | ✔ | ✔ | 0.3948 | 0.8648 | 0.3797 | 0.8745 | 0.4072 | 0.8577 | 0.4190 | 0.8431 |

## FIG. 11

| Method | t' | Entire Match | | Warm-Warm Match | | Warm-Cold Match | | Cold-Cold Match | |
|---|---|---|---|---|---|---|---|---|---|
| | | MSE ($\downarrow$) | AUROC ($\uparrow$) | MSE ($\downarrow$) | AUROC ($\uparrow$) | MSE ($\downarrow$) | AUROC ($\uparrow$) | MSE ($\downarrow$) | AUROC ($\uparrow$) |
| CUPID | - | 0.3968 | 0.8635 | 0.3815 | 0.8735 | 0.4094 | 0.8564 | 0.4214 | 0.8409 |
| | 2000ms | 0.3989 | 0.8616 | 0.3834 | 0.8719 | 0.4117 | 0.8541 | 0.4239 | 0.8389 |
| | 4000ms | 0.3990 | 0.8616 | 0.3834 | 0.8719 | 0.4118 | 0.8540 | 0.4239 | 0.8389 |
| | 8000ms | 0.3993 | 0.8614 | 0.3837 | 0.8717 | 0.4121 | 0.8538 | 0.4242 | 0.8386 |
| | 16000ms | 0.4004 | 0.8605 | 0.3848 | 0.8710 | 0.4132 | 0.8528 | 0.4254 | 0.8375 |
| Wide&Deep-S | - | 0.4197 | 0.8497 | 0.3996 | 0.8655 | 0.4359 | 0.8375 | 0.4539 | 0.8136 |

EP 4 708 187 A1

FIG. 12

(a) 99th PERCENTILE

(b) 90th PERCENTILE

EP 4 708 187 A1

FIG. 13

110

MEMORY — 111

PROCESSOR — 113

EP 4 708 187 A1

## INTERNATIONAL SEARCH REPORT

| International application No. |
| --- |
| **PCT/KR2024/005695** |

### A. CLASSIFICATION OF SUBJECT MATTER

**G06Q 50/00**(2006.01)i; **G06N 3/08**(2006.01)i

According to International Patent Classification (IPC) or to both national classification and IPC

### B. FIELDS SEARCHED

Minimum documentation searched (classification system followed by classification symbols)

G06Q 50/00(2006.01); G06Q 30/02(2012.01); G06Q 30/06(2012.01); G06Q 50/10(2012.01); H04N 21/00(2011.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 매칭(matching), 추천(recommendation), 피처 임베딩(feature embedding), 프로필 (profile), 모델(model), 세션(session), 만족도(satisfaction), 대화(conversation), 학습(learning)

### C. DOCUMENTS CONSIDERED TO BE RELEVANT

| Category* | Citation of document, with indication, where appropriate, of the relevant passages | Relevant to claim No. |
| --- | --- | --- |
| Y | KR 10-1422111 B1 (FOUNDATION FOR RESEARCH AND BUSINESS, SEOUL NATIONAL UNIVERSITY OF SCIENCE AND TECHNOLOGY) 29 July 2014 (2014-07-29)<br>See paragraphs [0027]-[0029], [0040], [0109], [0124], [0130], [0136] and [0146] and claims 1 and 4-7. | 1-20 |
| Y | JP 2021-068053 A (FUJI XEROX CO., LTD.) 30 April 2021 (2021-04-30)<br>See paragraphs [0086]-[0091], [0112]-[0117] and [0122]. | 1-20 |
| Y | KR 10-2021-0018384 A (NAVER CORPORATION et al.) 17 February 2021 (2021-02-17)<br>See paragraphs [0007], [0010], [0054], [0072]-[0080] and [0085] and claims 1-8. | 1-20 |
| A | KR 10-2022-0075602 A (INDUSTRY-ACADEMIC COOPERATION FOUNDATION, YONSEI UNIVERSITY) 08 June 2022 (2022-06-08)<br>See entire document. | 1-20 |
| A | KR 10-2016-0034334 A (FACEBOOK, INC.) 29 March 2016 (2016-03-29)<br>See entire document. | 1-20 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **22 July 2024** | **22 July 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

### INTERNATIONAL SEARCH REPORT
**Information on patent family members**

International application No.

**PCT/KR2024/005695**

| Patent document cited in search report | | | Publication date (day/month/year) | Patent family member(s) | | | Publication date (day/month/year) |
|---|---|---|---|---|---|---|---|
| KR | 10-1422111 | B1 | 29 July 2014 | | None | | |
| JP | 2021-068053 | A | 30 April 2021 | JP | 7400334 | B2 | 19 December 2023 |
| | | | | US | 2021-0118035 | A1 | 22 April 2021 |
| KR | 10-2021-0018384 | A | 17 February 2021 | JP | 07083375 | B2 | 10 June 2022 |
| | | | | JP | 2021-026779 | A | 22 February 2021 |
| | | | | KR | 10-2214422 | B1 | 09 February 2021 |
| | | | | KR | 10-2342678 | B1 | 27 December 2021 |
| KR | 10-2022-0075602 | A | 08 June 2022 | KR | 10-2467676 | B1 | 15 November 2022 |
| KR | 10-2016-0034334 | A | 29 March 2016 | AU | 2014-290339 | A1 | 03 March 2016 |
| | | | | AU | 290339 | B2 | 29 June 2017 |
| | | | | CA | 2918053 | A1 | 22 January 2015 |
| | | | | CA | 2918053 | C | 15 August 2017 |
| | | | | IL | 243539 | A | 31 October 2017 |
| | | | | JP | 2016-532943 | A | 20 October 2016 |
| | | | | JP | 6145576 | B2 | 14 June 2017 |
| | | | | KR | 10-1820893 | B1 | 22 January 2018 |
| | | | | US | 10367862 | B2 | 30 July 2019 |
| | | | | US | 2015-0019640 | A1 | 15 January 2015 |
| | | | | US | 2017-0085607 | A1 | 23 March 2017 |
| | | | | US | 9552055 | B2 | 24 January 2017 |
| | | | | WO | 2015-009572 | A1 | 22 January 2015 |

Form PCT/ISA/210 (patent family annex) (July 2022)